# EUROPEAN PATENT APPLICATION

(11) **EP 4 160 515 A1**
(43) Date of publication of application: **05.04.2023**
(21) Application number: 21812089.7
(22) Date of filing: 26.05.2021
(51) Int. Cl.: G06Q 50/10

(54) **INFORMATION PROCESSING DEVICE, INFORMATION PROCESSING METHOD, AND PROGRAM**

(30) Priority: 26.05.2020 JP 2020091776
(71) Applicant: NTT Communications Corporation, Tokyo 100-8019 (JP)
(72) Inventor: SAKAINO, Akira, Tokyo 100-8019 (JP); NIITSUMA, Hideaki, Tokyo 100-8019 (JP); SUZUKI, Yoichi, Tokyo 100-8019 (JP); ITO, Masataka, Tokyo 100-8019 (JP)
(74) Representative: Nederlandsch Octrooibureau
(86) International application number: PCT/JP2021/020048
(87) International publication number: WO 2021/241648

(57) **Abstract**

A technique for tracing the amount of CO₂ emissions in the distribution process of a tangible object is provided. An information processing device includes: an acquisition unit configured to acquire information on electric power and information on fuel which are used in each of a plurality of steps of a distribution process of a tangible object; a calculation unit configured to calculate an amount of CO₂ emissions generated in each of the steps, by using the information on electric power and the information on fuel which are acquired by the acquisition unit; and a storage control unit configured to control a storage unit to store the amount of CO₂ emissions generated in each of the steps that is calculated by the calculation unit, in association with the tangible object.

## Description

### FIELD

The embodiments of the present invention relate to an information processing device, an information processing method and a program that trace the amount of CO₂ emissions, for example, in the distribution process of a product.

### BACKGROUND

In recent years, there is growing interest about the circular economy, especially in Europe. One of the purposes of the circular economy is to reduce the burden on the environment. Therefore, there is a need to trace the amount of CO₂ emissions in the distribution process of products or the like.

Patent Literature 1 discloses that a value indicating the effect of reducing the amount of CO₂ emissions can be easily calculated by collecting cartridges.

### CITATION LIST

### PATENT LITERATURE

Patent Literature 1: Japanese Patent No. 5283087

### SUMMARY

### TECHNICAL PROBLEM

However, the distribution process of tangible objects such as products goes through various steps, including manufacturing, shipping (or delivery), use, collection, and reuse (or recycling). Therefore, the amount of CO₂ emissions in the distribution process of products cannot be traced by merely calculating the amount of CO₂ emissions in some steps.

The present invention has been made with the above circumstances taken into consideration, and aims to provide a technique for tracing the amount of CO₂ emissions in the distribution process of a tangible object.

### SOLUTION TO PROBLEM

To solve the above problem, one aspect of an information processing device according to the present invention provides: an acquisition unit configured to acquire information on electric power and information on fuel which are used in each of a plurality of steps of a distribution process of a tangible object; a calculation unit configured to calculate an amount of CO₂ emissions generated in each of the steps, by using the information on electric power and the information on fuel which are acquired by the acquisition unit; and a storage control unit configured to control a storage unit to store the amount of CO₂ emissions generated in each of the steps that is calculated by the calculation unit, in association with the tangible object.

### ADVANTAGEOUS EFFECTS OF INVENTION

According to one aspect of the present invention, it is possible to provide a technique for tracing the amount of CO₂ emissions in the distribution process of a tangible object.

### BRIEF DESCRIPTION OF THE DRAWINGS

FIG. 1 is a diagram illustrating the configuration of an information processing system that includes an information processing device according to one embodiment of the present invention.
FIG. 2 is a block diagram showing the hardware configuration of the information processing device according to one embodiment of the present invention.
FIG. 3 is a block diagram showing the software configuration of the information processing device according to one embodiment of the present invention.
FIG. 4 is a diagram showing the amount of CO₂ emissions stored in the information processing device according to one embodiment of the present invention.
FIG. 5 is a flowchart showing how the information processing device according to one embodiment of the present invention executes calculation processing of the amount of CO₂ emissions and also shows the contents of that processing.
FIG. 6 is a flowchart showing how the information processing device according to one embodiment of the present invention executes the generation processing of a prediction model and also shows the contents of that processing.
FIG. 7 is a flowchart showing how the information processing device according to one embodiment of the present invention executes the calculation processing of an environmental load equivalent amount and also shows the contents of that processing.

### DETAILED DESCRIPTION

Embodiments of the present invention will now be described with reference to the accompanying drawings.

### (First Embodiment)

### (Configuration Example)

### (1) Information Processing System

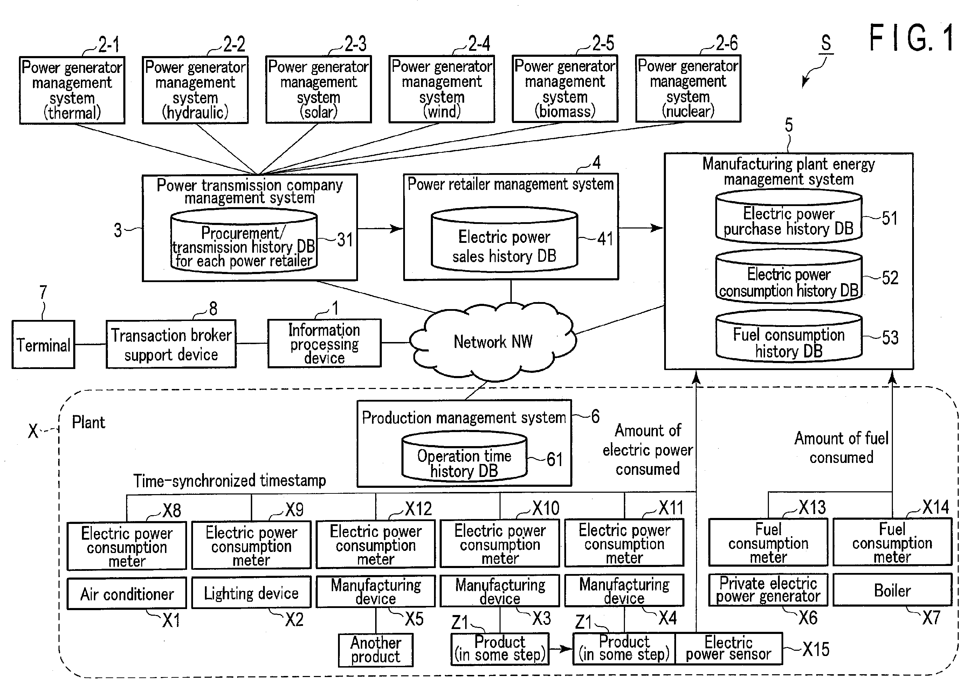

FIG. 1 is a schematic configuration diagram of an information processing system provided with an information processing device according to one embodiment of the present invention.

The information processing system S includes an information processing device 1, a plurality of power generator management systems 2-1 to 2-6, a power transmission company management system 3, a power retailer management system 4, a manufacturing plant energy management system 5, a production management system 6, a terminal 7, a transaction broker support device 8, etc. The elements included in the information processing system S are connected either by wire or by wireless via a network NW such as the Internet such that information communications are enabled.

The information processing device 1 is a device that traces the amount of CO₂ emissions in the distribution process of a tangible object. The configuration of the information processing device 1 will be described later.

A tangible object is something that has substance. A tangible object is something that is manufactured, and may be a movable property such as a product or a part, or may be an immovable property such as a condominium, an independent house or an office building. Products include a variety of electric home appliances, fuel-powered automobiles, and the like. Parts include various things that are part of a product or property. In the description below, the products will be mainly described as examples of tangible objects. In the description below, "product", "product Z1" and "product Z2" can be read as "tangible objects" as appropriate.

The distribution process includes various steps in the distribution of a tangible object. The distribution process may vary depending upon the type of tangible object. For example, where the tangible object is a product or part, the distribution process includes various steps in sequence, which are manufacturing, shipping (or delivery), use, collection and reuse (or recycling). The contents and orders of the steps included in the distribution process may vary depending upon the type of product or part. For example, where the tangible object is an immovable property, the distribution process includes various steps in sequence, which are manufacturing, use and reuse. The contents and orders of the steps involved in the distribution process may vary depending upon the type of immovable property.

Each of the plurality of power generator management systems 2-1 to 2-6 is a system that manages the electric power generation business of a power generator according to the type of electric power supply. The plurality of power generator management systems 2-1 to 2-6 are power generator management systems for different types of electric power supply, such as thermal electric power, hydraulic electric power, solar electric power, wind electric power, biomass power and nuclear power. The information processing system S may include a power generator management system corresponding to the type of electric power supply such as geothermal power.

The power transmission company management system 3 is a system that manages the electric power transmission which a power transmission company performs from a plurality of electric power generation companies to each power retailer. The power transmission company management system 3 is connected to a plurality of power generator management systems 2-1 to 2-6 such that information communications are enabled. The power transmission company management system 3 manages the electric power transmission to each power retailer, based on retailer-based power supply type data determined for each power retailer. The power supply type data includes a power supply type ratio provided from each of a plurality of power generation companies. The power supply type ratio is a ratio of each electric power supply type to the whole. The power transmission company management system 3 manages the electric power procurement from the plurality of power generation companies to each power retailer, based on electric power supply type data. The power transmission company management system 3 manages the electric power transmission to each power retailer, based on the electric power supply type data.

The power transmission company management system 3 stores a procurement/transmission history database 31 for each power retailer. The procurement/transmission history database 31 for each power retailer manages the history of electric power supply type data for each power retailer in time series. The procurement/transmission history database 31 for each power retailer is updated whenever the electric power supply type data is added.

The power retailer management system 4 is a system used by a certain power retailer. The power retailer management system 4 is a system that manages sales of electric power which a power retailer performs from a power transmission company to a consumer. For example, the consumer is a business operator who operates a plant or a user of electric power. The power retailer management system 4 is connected to the power transmission company management system 3 such that information communications are enabled.

The power retailer management system 4 stores an electric power sales history database 41. For example, the electric power sales history database 41 stores an electric power sales history that manages daily electric power sales data in time series. The electric power sales data is data related to electric power to be sold. The electric power sales data includes a ratio of electric power supply types for each time period. The ratio of electric power supply types may be set differently for each location where the electric power to be sold is used. The ratio of electric power supply types may be set differently for each time period. The electric power sales data is data determined according to the contract between a power retailer and a consumer. The electric power sales history database 41 is updated whenever the electric power sales data is added.

The manufacturing plant energy management system 5 is a system that manages energy used in one or more manufacturing plants. The manufacturing plant energy management system 5 is connected to the power retailer management system 4 such that information communications are enabled. A description will be given, referring to an example in which the manufacturing plant energy management system 5 manages the energy used in a plant X.

The manufacturing plant energy management system 5 stores an electric power purchase history database 51. For example, the electric power purchase history database 51 stores an electric power purchase history used for managing daily electric power purchase data in time series. The electric power purchase data is data related to electric power to be purchased. The electric power purchase data includes a ratio of power supply types of electric power to be purchased for each time period. The ratio of power supply types may be set differently for each time period. The ratio of power supply types may be set differently on a daily basis.

The manufacturing plant energy management system 5 stores an electric power consumption history database 52. The electric power consumption history database 52 stores an electric power consumption history used for managing daily electric power consumption data of each plant to be managed by the manufacturing plant energy management system 5. The electric power consumption data is data related to electric power consumption.

The electric power consumption data includes the amount of electric power which each device in the plant consumes for each time period. The amount of electric power which each device consumes for each time period is associated with a device number of the device. The device number is a unique number for identifying each device. For example, the device number is assigned when a system in the plant is constructed or set. In addition, the amount of electric power which each device consumes for each time period is associated with information indicating that the device is directly used for a specific product or with information indicating that the device is commonly used for a plurality of products. Information indicating that a device is directly used for a specific product includes information indicative of the specific product. The device that is directly used for the specific product is referred to as a direct-use device as well. For example, the direct-use device is a device that is used directly for the manufacturing of a product and used solely for that product. For example, direct-use devices that operate on electric power are machine tools, robots, conveyors, etc. For example, a device commonly used for a plurality of products is also called an indirect-use device. For example, indirect-use devices that operate on electric power are computers, communication devices, servers in data centers, lighting devices, air conditioners, storage batteries, etc.

The electric power consumption data includes the amount of electric power which each product manufactured in the plant consumes for each time period. The amount of electric power which each product consumes for each time period is associated with a product number of the product. The product number is a unique number for identifying each product. For example, a product number is assigned when the manufacturing of each product is planned. Even products of the same type (same model, etc.) have different product numbers if they are manufactured in different periods.

The manufacturing plant energy management system 5 appropriately acquires a device number, information indicative of a direct-use device (or information indicative of an indirect-use device), and data including the amount of electric power consumed for each time period, from electric power consumption meters attached to devices of a plant that operate on electric power. The manufacturing plant energy management system 5 appropriately acquires data including a product number and the amount of electric power consumed for each time period, from electric power sensors attached to products that operate on electric power. The manufacturing plant energy management system 5 constructs electric power consumption data from the data supplied from the electric power consumption meters and the data supplied from the electric power sensors. The manufacturing plant energy management system 5 adds the electric power consumption data to the electric power consumption history database 52. The electric power consumption history database 52 is updated whenever the electric power consumption data is added.

The manufacturing plant energy management system 5 stores a fuel consumption history database 53. The fuel consumption history database 53 stores an electric power consumption history used for managing daily fuel consumption data of each plant to be managed by the manufacturing plant energy management system 5. For example, the fuel is heavy oil, gasoline, wood chips, etc. The fuel consumption data is data related to fuel consumption.

The fuel consumption data includes the amount of fuel which each device in the plant consumes for each time period. The amount of fuel which each device consumes for each time period is associated with a device number of the device. The amount of fuel which each device consumes for each time period is associated with a type of fuel. In addition, the amount of fuel which each device consumes for each time period is associated with information indicative of a direct-use device or information indicative of an indirect-use device. The information indicative of a direct-use device includes information indicative of a specific product. For example, direct-use devices operated on fuel are machine tools, robots, conveyors, etc. For example, indirect-use devices operated on fuel are power machines, engines, boilers, etc.

The fuel consumption data includes the amount of fuel which each product manufactured in the plant consumes for each time period. The amount of fuel which each produce consumes for each time period is associated with a product number of the product.

The manufacturing plant energy management system 5 appropriately acquires a device number, information indicative of a direct-use device (or information indicative of an indirect-use device), and data including the amount of fuel consumed for each time period, from fuel consumption meters attached to devices of a plant that operate on fuel. The manufacturing plant energy management system 5 appropriately acquires data including a product number and the amount of fuel consumed for each time period from fuel sensors attached to products. The manufacturing plant energy management system 5 constructs fuel consumption data from the data supplied from each fuel consumption meter and the data supplied from each fuel sensor. The manufacturing plant energy management system 5 adds the fuel consumption data to the fuel consumption history database 53. The fuel consumption history database 53 is updated whenever the fuel consumption data is added.

The production management system 6 is a system that manages the manufacturing process of each product in the plant X. The production management system 6 stores an operation time history database 61.

The operation time history database 61 stores an operation time history used for managing the operation times of each device and each product during the process of manufacturing each product in the plant X. The operation time is a time during which electric power or fuel is used. The operation time is associated with the device numbers of devices in the plant (direct-use device and indirect-use device) or with the product numbers of the product. The operation time includes an operation start time and an operation end time. The operation time may consist of a plurality of intermittent times. In this case, the operation time may include an operation start time and an operation end time of each of the plurality of intermittent times. The production management system 6 acquires an operation time by appropriately obtaining operation-related data from each device or each product. The production management system 6 adds the operation time to the operation time history database 61. The operation time history database 61 is updated whenever the operation time is added.

A description will be given of the plant X. The plant X includes an air conditioner X1, a lighting device X2, a manufacturing device X3, a manufacturing device X4, a manufacturing device X5, a private electric power generator X6, a boiler X7, electric power consumption meters X8 to X12, fuel consumption meters X13 to X14, etc.

The air conditioner X1 is a device that operates on electric power.

The lighting device X2 is a device that operates on electric power.

The manufacturing device X3 is a device that operates on electric power. The manufacturing device X3 is a device that is directly used for manufacturing a product Z1.

The manufacturing device X4 is a device that operates on electric power. The manufacturing device X4 is a device that is directly used for manufacturing the product Z1.

The manufacturing device X5 is a device that operates on electric power. The manufacturing device X5 is a device that is directly used for manufacturing a product different from the product Z1.

The private electric power generator X6 is a device that operates on fuel. The private electric power generator X6 is an indirect-use device.

The boiler X7 is a device that operates on fuel. The boiler X7 is an indirect-use device.

The electric power consumption meter X8 is attached to the air conditioner X1 and measures the electric power consumption of the air conditioner X1. The electric power consumption meter X8 transmits to the manufacturing plant energy management system 5 data including the device number of the air conditioner X1, information indicative of an indirect-use device, and the amount of electric power which the air conditioner X1 consumes for each time period.

The electric power consumption meter X9 is attached to the lighting device X2 and measures the electric power consumption of the lighting device X2. The electric power consumption meter X9 transmits to the manufacturing plant energy management system 5 data including the device number of the lighting device X2, information indicative of an indirect-use device, and the amount of electric power which the lighting device X2 consumes for each time period.

The electric power consumption meter X10 is attached to the manufacturing device X3 and measures the electric power consumption of the manufacturing device X3. The electric power consumption meter X10 transmits to the manufacturing plant energy management system 5 data including the device number of the manufacturing device X3, information indicative of the direct-use device for the product Z1, and the amount of electric power which the manufacturing device X3 consumes for each time period.

The electric power consumption meter X11 is attached to the manufacturing device X4 and measures the electric power consumption of the manufacturing device X4. The electric power consumption meter X11 transmits to the manufacturing plant energy management system 5 data including the device number of the manufacturing device X4, information indicative of the direct-use device for the product Z1, and the amount of electric power which the manufacturing device X4 consumes for each time period.

The electric power consumption meter X12 is attached to the manufacturing device X5 and measures the electric power consumption of the manufacturing device X5. The electric power consumption meter X12 transmits to the manufacturing plant energy management system 5 data including the device number of the manufacturing device X5, information indicative of the direct-use device for another product, and the amount of electric power which the manufacturing device X5 consumes for each time period.

The fuel consumption meter X13 is attached to the private electric power generator X6 and measures the fuel consumption of the private electric power generator X6. The fuel consumption meter X13 transmits to the manufacturing plant energy management system 5 data including the device number of the private electric power generator X6, information indicative of an indirect-use device, and the amount of fuel which the private electric power generator X6 consumes for each time period.

A fuel consumption meter X14 is attached to the boiler X7 and measures the fuel consumption of the boiler X7. The fuel consumption meter X14 transmits to the manufacturing plant energy management system 5 data including the device number of the boiler X7, information indicative of an indirect-use device, and the amount of fuel which the boiler X7 consumes for each time period.

An electric power sensor is attached to each product. For example, the product Z1 is provided with an electric power sensor X15. The electric power sensor X15 measures the electric power consumption of the product Z1. The electric power sensor X15 transmits to the manufacturing plant energy management system 5 data including the product number of the product Z1 and the amount of electric power which the product Z1 consumes for each time period. Each product may be provided with a fuel sensor, depending upon the nature of that product. In this case, the fuel sensor measures the fuel consumption of the product. The fuel sensor transmits to the manufacturing plant energy management system 5 data including the product number of the product and the amount of fuel which the product consumes for each time period.

The terminal 7 is a terminal used for the transaction of products, which will be described later. The terminal 7 is a smartphone, a PC, or the like.

The transaction broker support device 8 is a device that supports the broking business of products, which will be described later.

### (2) Information Processing Device

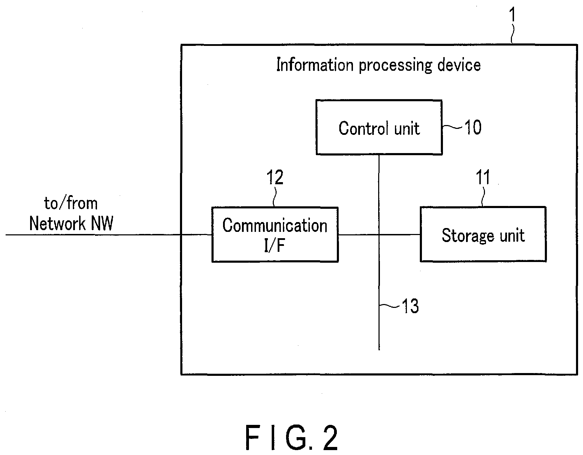

FIG. 2 is a block diagram showing a hardware configuration of the information processing device 1.

The information processing device 1 includes a control unit 10 having a hardware processor, such as a central processing unit (CPU), and a storage unit 11 and a communication interface (communication I/F) 12 are connected to the control unit 10 via a bus 13.

The storage unit 11 is provided with, for example, a storage medium obtained by combining a nonvolatile memory which enables data to be written or read at any time, like a hard disk drive (HDD) or a solid state drive (SSD), with a read only memory (ROM) and a random access memory (RAM). The storage unit 11 has a program storage area and a data storage area. It should be noted that the configuration of the storage medium is not limited to the configuration described above. Programs necessary for executing various control processes related to one embodiment of the present invention are stored in the program storage area, in addition to middleware such as an operating system (OS).

The storage unit 11 stores an electric power sales history database 111 for each power retailer. The electric power sales history database 111 for each power retailer stores an electric power sales history for each power retailer. The electric power sales history for each power retailer is composed of electric power sales histories acquired from a plurality of power retailer management systems including the power retailer management system 4.

The storage unit 11 stores an electric power purchase history database 112 for each manufacturing plant. The electric power purchase history database 112 for each manufacturing plant stores an electric power purchase history of each manufacturing plant. The electric power purchase history for each manufacturing plant is composed of electric power purchase histories acquired from a plurality of manufacturing plant energy management systems including the manufacturing plant energy management system 5.

The storage unit 11 stores an electric power consumption history database 113 for each manufacturing plant. The electric power consumption history database 113 for each manufacturing plant stores an electric power consumption history of each manufacturing plant. The electric power consumption history for each manufacturing plant is composed of electric power consumption histories acquired from a plurality of manufacturing plant energy management systems including the manufacturing plant energy management system 5.

The storage unit 11 stores a fuel consumption history database 114 for each manufacturing plant. The fuel consumption history database 114 for each manufacturing plant stores a fuel consumption history of each manufacturing plant. The fuel consumption history for each manufacturing plant is composed of fuel consumption histories acquired from a plurality of manufacturing plant energy management systems including the manufacturing plant energy management system 5.

The storage unit 11 stores an operation time history database 115 for each manufacturing plant. The operation time history database 115 for each manufacturing plant stores an operation time history of each manufacturing plant. The operation time history of each manufacturing plant is composed of operation time histories acquired from a plurality of production management systems including the production management system 6.

The storage unit 11 stores a CO₂ emission amount coefficient database 116 for each electric power supply type. The CO₂ emission amount coefficient database 116 for each electric power supply type is used for managing the history of the CO₂ emission amount coefficient of each electric power supply type in time series. For example, the CO₂ emission amount coefficient is a CO₂ emission amount per kwh of electricity. The CO₂ emission amount coefficient for each electric power supply type can be obtained from materials disclosed by electric power retailers or from average values of the amount of CO₂ emissions of each electric power supply type that are made public by the Agency for Natural Resources and Energy of the Ministry of Economy, Trade and Industry. The CO₂ emission amount coefficient for each electric power supply type may differ depending upon the location (country, region, etc.) of electric power usage. The CO₂ emission amount coefficient for each electric power supply type may change depending upon the technological evolution (performance of electric power generation facilities used by electric power generation companies), the location of electric power usage, the electric power transmission distance, the electric power transmission and distribution efficiency, etc. Therefore, the CO₂ emission amount coefficient database 116 for each electric power supply type retains the history of the CO₂ emission amount coefficient for each electric power supply type in time series so as to ensure traceability. The CO₂ emission amount coefficient database 116 for each electric power supply type is updated whenever a new CO₂ emission amount coefficient for each electric power supply type is added.

The storage unit 11 stores a CO₂ emission amount coefficient database 117 for each fuel type. The CO₂ emission amount coefficient database 117 for each fuel type is used for managing the history of the CO₂ emission amount coefficient of each fuel type in time series. For example, the CO₂ emission amount coefficient is an amount of CO₂ emissions per unit consumption of each fuel. The CO₂ emission amount coefficient for each fuel type is a value that can be calculated from the element amounts of fuel (chemical formula, etc.), or from materials disclosed by the government or academic institutions, etc. The CO₂ emission amount coefficient for each fuel type may change in accordance with technological progress, etc. Therefore, the CO₂ emission amount coefficient database 117 for each fuel type retains the history of the CO₂ emission amount coefficient of each fuel type in time series so as to ensure traceability. The CO₂ emission amount coefficient database 117 for each fuel type is updated whenever a new CO₂ emission amount coefficient for each fuel type is added.

The storage unit 11 stores a CO₂ emission amount database 118. The CO₂ emission amount database 118 stores an amount of CO₂ emissions generated in each of a plurality of steps of the distribution process of each product in association with each product. The amount of CO₂ emissions is calculated by the information processing device 1. An example of how the CO₂ emission is calculated by the information processing device 1 will be described later. A configuration example of the CO₂ emission database will be described later.

The storage unit 11 stores a prediction model database 119. The prediction model database 119 stores a prediction model of each step for each product type. The prediction model is an algorithm used for predicting an amount of CO₂ emissions generated in each of the steps of a product distribution process. A prediction model is generated for each product type and for each step. A prediction model is generated by the information processing device 1. An example of how a prediction model is generated by the information processing device 1 will be described later.

Part or all of the electric power sales history database 111 for each power retailer, the electric power purchase history database 112 for each manufacturing plant, the electric power consumption history database 113 for each manufacturing plant, the fuel consumption history database 114 for each manufacturing plant, the operation time history database 115 for each manufacturing plant, the CO₂ emission amount coefficient database 116 for each electric power supply type, the CO₂ emission amount coefficient database 117 for each fuel type, the CO₂ emission amount database 118, and the prediction model database 119 may be stored in a device independent of the information processing device 1.

The communication I/F 13 includes, for example, an interface compatible with a wide area data network such as the Internet, and is connected to other elements via a network NW in response to instructions from the control unit 10 such that information communications are enabled.

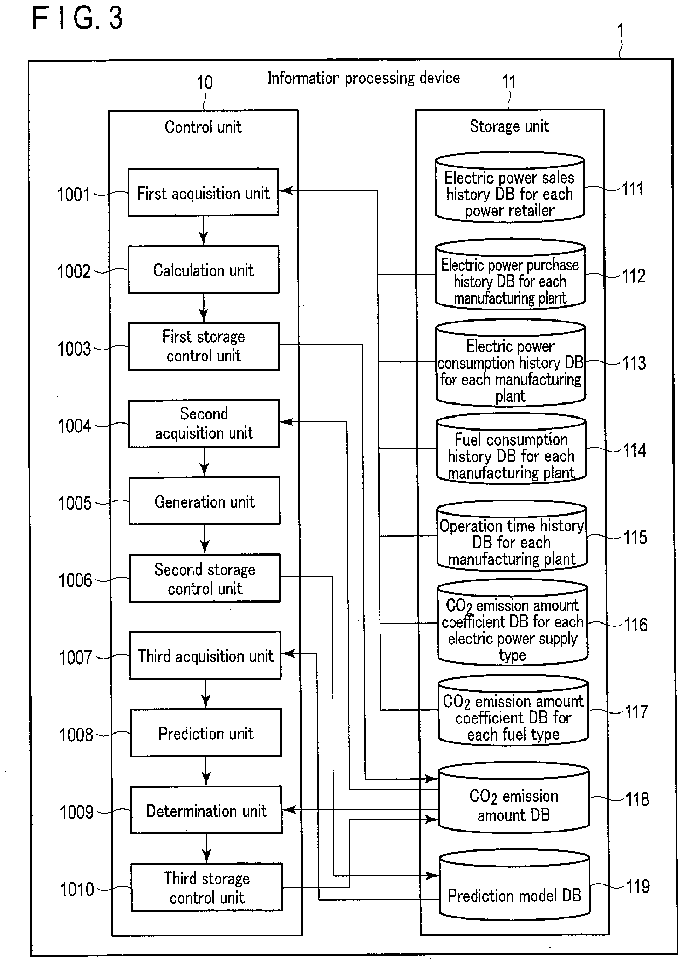

FIG. 3 is a block diagram showing the software configuration of the information processing device 1.

As various control functions, the control unit 10 is provided with a first acquisition unit 1001, a calculation unit 1002, a first storage control unit 1003, a second acquisition unit 1004, a generation unit 1005, a second storage control unit 1006, a third acquisition unit 1007, a prediction unit 1008 , a determination unit 1009 and a third storage control unit 1010. These control functions are implemented by causing the hardware processor of the control unit 10 to execute programs stored in the program storage area of the storage unit 11. It should be noted that where the information processing device 1 is composed of a plurality of devices, the units described above are implemented by a plurality of devices.

The first acquisition unit 1001 acquires information on electric power and fuel which are used in each of the steps of a product distribution process. The information on electric power includes various kinds of information related to the electric power used. The information on fuel includes various kinds of information related to the fuel used.

The calculation unit 1002 calculates the amount of CO₂ emissions generated in each of the steps, by using the information on electric power and fuel acquired by the first acquisition unit 1001.

The first storage control unit 1003 controls the storage unit 11 to store the amount of CO₂ emissions generated in each of the steps and calculated by the calculation unit 1002, in association with a product.

The second acquisition unit 1004 acquires from the storage unit 11 data which the generation unit 1005 uses to generate a prediction model.

Using the data acquired by the second acquisition unit 1004, the generation unit 1005 generates a prediction model for each step, by which an amount of CO₂ emissions which may be generated in each of the steps of the distribution process is predicted.

The second storage control unit 1006 controls the storage unit 11 to store the prediction model generated by the generation unit 1005.

The third acquisition unit 1007 acquires from the storage unit 11 a prediction model which the prediction unit 1008 is to use for the prediction of the amount of CO₂ emissions.

Using the prediction model acquired by the third acquisition unit 1007, the prediction unit 1008 predicts the amount of CO₂ emissions generated in each of one or more unfinished steps included in the steps for a target product. The target product is a product for which part or all of the steps of the distribution process have not yet been completed. For example, where the target product is a product which has not yet been manufactured, all of the steps of the distribution process are unfinished steps. For example, where the target product is a product that has already been manufactured, the manufacturing step is a completed step, and the steps of the distribution process other than the manufacturing step (such as a usage step) are unfinished steps.

The determination unit 1009 determines an environmental load equivalent amount of a target product, using the amount of CO₂ emissions predicted by the prediction unit 1008. The environmental load equivalent amount is an amount determined according to the amount of CO₂ emissions, and is an amount different from the price of the product. The environmental load equivalent amount may be an amount including an environmental value-added tax.

The third storage control unit 1010 controls the storage unit 11 to store the amount of CO₂ emissions predicted by prediction unit 1008. The third storage control unit 1010 controls the storage unit 11 to store the environmental load equivalent amount determined by the determination unit 1009.

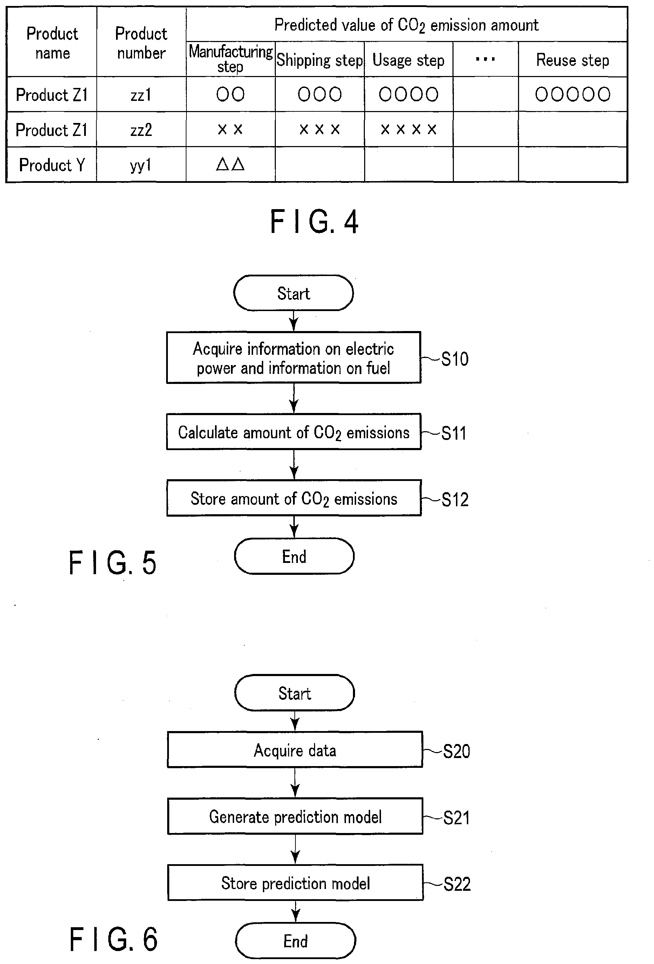

FIG. 4 is a diagram showing a CO₂ emission amount database.

The CO₂ emission amount database 118 stores an amount of CO₂ emissions generated in each of a plurality of steps of the distribution process of each product in association with each product. The CO₂ emission amount database 118 stores records that are associated with a product name, a product number, and an amount of CO₂ emissions generated in each of the steps. The product name is a name that identifies the type of product. The product name is a model name or the like. The CO₂ emission amount database 118 stores different records for different product numbers even if the product numbers are those of products which are of the same type and have the same product name. This is because even products of the same type have different amounts of CO₂ emissions if they are manufactured at different times.

### (Operation Example)

Next, an operation example of the information processing device 1 configured as above will be described.

### (Calculation Processing of Amount of CO₂ Emissions)

FIG. 5 is a flowchart showing how the information processing device 1 executes calculation processing of the amount of CO₂ emissions and also shows the contents of that processing. The information processing device 1 can sequentially perform calculation processing of the amount of CO₂ emissions each time a step of each product is completed. By way of example, the manufacturing step of the product Z1 will be described.

The first acquisition unit 1001 acquires information on electric power and fuel which are used in the manufacturing step of the distribution process of the product Z1 (step S10). In step S10, the first acquisition unit 1001 acquires the information on electric power and the information on fuel, as described below.

The first acquisition unit 1001 refers to the electric power consumption history database 113 for each manufacturing plant and acquires "product number a" of the product Z1. The first acquisition unit 1001 may refer to the fuel consumption history database 114 for each manufacturing plant or the operation time history database 115 for each manufacturing plant and acquire the "product number a" of the product Z1.

The first acquisition unit 1001 refers to the electric power consumption history database 113 for each manufacturing plant, and acquires the "direct-use device number b" of each direct-use device of the product Z1, based on the information indicative of the product Z1, such as the "product number a".

The first acquisition unit 1001 refers to the fuel consumption history database 114 for each manufacturing plant, and acquires the "direct-use device number b" of each direct-use device of the product Z1, based on the information indicative of the product Z1, such as the "product number a".

The first acquisition unit 1001 refers to the electric power consumption history database 113 for each manufacturing plant and acquires the "indirect-use device number c" of each indirect-use device in the plant X that manufactures the product Z1. The first acquisition unit 1001 refers to the fuel consumption history database 114 for each manufacturing plant and acquires the "indirect-use device number c" of each indirect-use device in the plant X that manufactures the product Z1.

The first acquisition unit 1001 refers to the operation time history database 115 for each manufacturing plant and acquires the "operation time d" associated with the "product number a" of the product Z1. The "operation time d" associated with the "device number a" of the product Z1 is related to the operation using at least one of electric power and fuel, so that it is an example of information included in at least one of the information on electric power and the information on fuel that are used in the manufacturing step of the product Z1.

The first acquisition unit 1001 refers to the operation time history database 115 for each manufacturing plant and acquires the "operation time d" associated with the "direct-use device number b" of each direct-use device of the product Z1. Since the "operation time d" associated with the "direct-use device number b" of each direct-use device is related to the operation using at least one of electric power and fuel, so that it is an example of information included in at least one of the information on electric power and the information on fuel that are used in the manufacturing step of the product Z1.

The first acquisition unit 1001 refers to the operation time history database 115 for each manufacturing plant, and acquires an "operation time d" associated with the device number of a direct-use device of another product manufactured in the same plant X as the product Z1. Since the "operation time d" associated with the device number of the direct-use device of another product is related to the operation using at least one of electric power and fuel, it is an example of the information on electric power and the information on fuel that are used in the manufacturing process of the product Z1.

The first acquisition unit 1001 refers to the operation time history database 115 for each manufacturing plant, and acquires an "operation time d" associated with the "indirect-use device number c" of each indirect-use device present in the plant X that manufactures the product Z1. Since the "operation time d" associated with the "indirect-use device number c" of each indirect-use device is related to the operation using at least one of electric power and fuel, it is an example of information included in at least one of the information on electric power and the information on fuel that are used in the manufacturing step of the product Z1.

The first acquisition unit 1001 refers to the electric power purchase history database 112 for each manufacturing plant and acquires a "usage rate e for each electric power supply" of the electric power used in the plant X that manufactures the product Z1. In other words, the first acquisition unit 1001 acquires the "usage rate e for each electric power supply" in accordance with the location of the product Z1 in the manufacturing step (the location of the plant X that manufactures the product Z1). The "usage rate e for each electric power supply" corresponds to the ratio of electric power supply types. The "usage rate e for electric power supply" is an example of information included in the information on the electric power used in the manufacturing step of the product Z1. More specifically, the "usage rate e for each electric power supply" is an example of information included in information on electric power supply type of the information on electric power.

The first acquisition unit 1001 refers to the CO₂ emission amount coefficient database 116 for each electric power supply type and acquires a "CO₂ emission amount coefficient f for each electric power supply type" according to the location of the product Z1 (the location of the plant X). The "CO₂ emission amount coefficient f for each electric power supply type" is an example of information included in the information on electric power used in the manufacturing step of the product Z1.

The first acquisition unit 1001 refers to the electric power consumption history database 113 for each manufacturing plant, and acquires an "amount g of electric power consumption" consumed by the product Z1 in the "operation time d" associated with the "product number a" of the product Z1. The "amount g of electric power consumption" of the product Z1 is associated with the "product number a" of the product Z1. The "amount g of electric power consumption" of the product Z1 is an example of information included in the information on electric power used in the manufacturing step of the product Z1.

The first acquisition unit 1001 refers to the electric power consumption history database 113 for each manufacturing plant, and acquires the "amount g of electric power consumption" which each direct-use device consumes in the "operation time d" associated with the "direct-use device number b" of each direct-use device of the product Z1. The "amount g of electric power consumption" of each direct-use device is associated with the "direct-use device number b" of each direct-use device. The "amount g of electric power consumption" of each direct-use device is an example of information included in the information on electric power used in the manufacturing step of the product Z1.

The first acquisition unit 1001 refers to the electric power consumption history database 113 for each manufacturing plant, and acquires an "amount g of electric power consumption" which each of other-product direct-use devices consumes in the "operation time d" associated with the device number of each of other-product direct-use devices. The "amount g of electric power consumption" of each of other-product direct-use devices is associated with the "direct-use device number b" of each of other-product direct-use devices. The "amount g of electric power consumption" of each of other-product direct-use devices is an example of information included in the information on electric power used in the manufacturing step of the product Z1.

The first acquisition unit 1001 refers to the electric power consumption history database 113 for each manufacturing plant, and acquires an "amount g of electric power consumption" which each indirect-use device consumes in the "operation time d" associated with the "indirect-use device number c" of each of the indirect-use devices present in the plant X that manufactures the product Z1. The "amount g of electric power consumption" of each indirect-use device is associated with the "indirect-use device number b" of each indirect-use device. The "amount g of electric power consumption" of each indirect-use device is an example of information included in the information on electric power used in the manufacturing step of the product Z1.

The first acquisition unit 1001 refers to the CO₂ emission amount coefficient database 117 for each fuel type and acquires a "CO₂ emission amount coefficient h for each fuel type". The "CO₂ emission amount coefficient h for each fuel type" is an example of information included in the information on fuel used in the manufacturing step of the product Z1.

The first acquisition unit 1001 refers to the fuel consumption history database 114 for each manufacturing plant, and acquires a "fuel consumption amount i" and a type of fuel which the product Z1 consumes in the "operation time d" associated with the "product number a" of the product Z1. The "fuel consumption amount i" of the product Z1 and the type of fuel are associated with the "product number a" of the product Z1. The "fuel consumption amount i" of the product Z1 and the type of fuel are examples of information included in the information on the fuel used in the manufacturing step of the product Z1.

The first acquisition unit 1001 refers to the fuel consumption history database 114 for each manufacturing plant, and acquires the "fuel consumption amount i" and the type of fuel which each direct-use device consumes in the "operation time d" associated with the "direct-use device number b" of each direct-use device of the product Z1. The "fuel consumption amount i" and type of fuel of each direct-use device are associated with the "direct-use device number b" of each direct-use device. The "fuel consumption amount i" and the type of fuel of each direct-use device are examples of information included in the information on the fuel used in the manufacturing step of the product Z1.

The first acquisition unit 1001 refers to the fuel consumption history database 114 for each manufacturing plant, and acquires "fuel consumption amount i" and the type of fuel which each of other-product direct-use devices consumes in the "operation time d" associated with the device number of each of other-product direct-use devices. The "fuel consumption amount i" and the type of fuel of each of other-product direct-use devices are associated with the "direct-use device number b" of each of other-product direct-use devices. The "fuel consumption amount i" and the type of fuel of each of other-product direct-use devices are examples of information included in the information on the fuel used in the manufacturing step of the product Z1.

The first acquisition unit 1001 refers to the fuel consumption history database 114 for each manufacturing plant, and acquires "fuel consumption amount i" and the type of fuel which each indirect-use device consumes in the "operation time d" associated with the "indirect-use device number c" of each of the indirect-use devices present in the plant X that manufactures the product Z1. The "fuel consumption amount i" and the type of fuel of each indirect-use device is associated with the "indirect-use device number b" of each indirect-use device. The "fuel consumption amount i" and the type of fuel of each indirect-use device are examples of information included in the information on the fuel used in the manufacturing step of the product Z1.

The calculation unit 1002 calculates the amount of CO₂ emissions generated in each of the steps, by using the information on electric power and information on fuel acquired by the first acquisition unit 1001 (step S11). In step S11, the calculation unit 1002 calculates an amount of CO₂ emissions, as described below.

The calculation unit 1002 calculates an "amount j of product CO₂ emissions" of the product Z1 generated in the manufacturing step, by using the "usage rate e for each electric power supply", the "CO₂ emission amount coefficient f for each electric power supply type", the "amount g of electric power consumption" of the product Z1, the "CO₂ emission amount coefficient h for each fuel type", the "fuel consumption amount i" and the type of fuel of the product Z1. The "amount j of product CO₂ emissions" is an amount of CO₂ emissions caused by a product consuming electric power and fuel. The "amount j of product CO₂ emissions" of the product Z1 is an example of information included in the information on the CO₂ emission of the product Z1.

The calculation unit 1002 multiplies the "amount g of electric power consumption" of the product Z1 by the "usage rate e for each electric power supply" to calculate an electric power consumption for each electric power supply type. It should be noted that where the "usage rate e for each electric power supply" differs depending upon the time periods, the calculation unit 1002 may decompose the "amount g of electric power consumption" of the product Z1 into electric power consumptions for the time periods and multiply the electric power consumption of each time period by the "usage rate e for each electric power supply" of each time period. The calculation unit 1002 multiplies each of the electric power consumptions for electric power supply types by the "CO₂ emission amount coefficient f for each electric power supply" to calculate an amount of CO₂ emissions for each electric power supply type. The calculation unit 1002 sums up the amounts of CO₂ emissions for the electric power supply types, and calculates an amount of CO₂ emissions related to the electric power used.

The calculation unit 1002 multiplies the "fuel consumption amount i" of the product Z1 by the "CO₂ emission amount coefficient h for each fuel type" corresponding to the type of fuel consumed by the product Z1, and calculates a CO₂ emission related to the fuel used.

The calculation unit 1002 sums up the amount of CO₂ emissions related to electric power and the amount of CO₂ emissions related to fuel, to calculate an "amount j of product CO₂ emissions" of the product Z1. The calculation unit 1002 associates the "amount j of product CO₂ emissions" of the product Z1 with the "manufacturing number a" of the product Z1.

The calculation unit 1002 calculates an "amount k of CO₂ emissions of direct-use devices" regarding the product Z1 in the manufacturing step, by using the "usage rate e for each electric power supply", the "CO₂ emission amount coefficient f for each electric power supply type", the "amount g of electric power consumption" of each direct-use device, the "CO₂ emission amount coefficient h for each fuel type", the "fuel consumption amount i" of each direct-use device, and the type of fuel. The "amount k of CO₂ emissions of direct-use devices" is the sum of the amounts of CO₂ emissions generated due to the electric power and fuel consumed by each direct-use device. The "amount k of CO₂ emissions of direct-use devices" regarding the product Z1 is an example of information included in the information regarding the CO₂ emissions of the device used for the product Z1.

The calculation unit 1002 multiplies the "amount g of electric power consumption" of each direct-use device by the "usage rate e for each electric power supply" to calculate an electric power consumption for each electric power supply type. It should be noted that where the "usage rate e for each electric power supply" differs depending upon the time periods, the calculation unit 1002 may decompose the "amount g of electric power consumption" of each direct-use device into electric power consumptions of the time periods and multiply the electric power consumption of each time period by the "usage rate e for each electric power supply" of each time period. With respect to each direct-use device, the calculation unit 1002 multiplies each of amounts of electric power consumptions for each electric power supply type by the "CO₂ emission amount coefficient f for each electric power supply" to calculate an amount of CO₂ emissions for each electric power supply type. With respect to the direct-use devices, the calculation unit 1002 sums up the amounts of CO₂ emissions for each electric power supply type. The calculation unit 1002 sums up the amounts of CO₂ emissions of the direct-use devices, and calculates an amount of CO₂ emissions related to the electric power used.

The calculation unit 1002 multiplies the "fuel consumption amount i" of each direct-use device by the "CO₂ emission amount coefficient h for each fuel type" corresponding to the type of fuel consumed by each direct-use device, and calculates an amount of CO₂ emissions of each direct-use device. The calculation unit 1002 sums up the amounts of CO₂ emissions of the direct-use devices to calculate an amount of CO₂ emissions related to the fuel used.

The calculation unit 1002 sums up the amount of CO₂ emissions related to electric power and the amount of CO₂ emissions related to fuel, to calculate an amount of "CO₂ emissions k of direct-use devices" regarding the product Z1. The calculation unit 1002 associates the "amount of CO₂ emissions k of direct-use devices" regarding the product Z1 with the "manufacturing number a" of the product Z1.

The calculation unit 1002 calculates an "amount 1 of CO₂ emissions of other-product direct-use devices" regarding the product Z1 in the manufacturing step, by using the "usage rate e for each electric power supply", the "CO₂ emission amount coefficient f for each electric power supply type", the "amount g of electric power consumption" of each other-product direct-use device, the "CO₂ emission amount coefficient h for each fuel type", the "fuel consumption amount i" of each other-product direct-use device, and the type of fuel. The "amount 1 of CO₂ emissions of other-product direct-use devices" is the sum of the amounts of CO₂ emissions caused by the consumption of electric power and fuel by each of the other-product direct-use devices.

The calculation unit 1002 multiplies the "amount g of electric power consumption" of each other-product direct-use device by the "usage rate e for each electric power supply" to calculate an electric power consumption for each electric power supply type. It should be noted that where the "usage rate e for each electric power supply" differs depending upon the time periods, the calculation unit 1002 may decompose the "amount g of electric power consumption" of each other-product direct-use device into electric power consumptions for the time periods and multiply the electric power consumption of each time period by the "usage rate e for each electric power supply" of each time period. With respect to the other-product direct-use devices, the calculation unit 1002 multiplies each of the amounts of electric power consumptions for the electric power supply types by the "CO₂ emission amount coefficient f for each electric power supply" to calculate an amount of CO₂ emissions for each electric power supply type. With respect to the other-product direct-use devices, the calculation unit 1002 sums up the amounts of CO₂ emissions for each electric power supply type. The calculation unit 1002 sums up the amounts of CO₂ emissions of the other-product direct-use devices, and calculates an amount of CO₂ emissions related to the electric power used.

The calculation unit 1002 multiplies the "fuel consumption amount i" of each other-product direct-use device by the "CO₂ emission amount coefficient h for each fuel type" corresponding to the type of fuel consumed by each other-product direct-use device, and calculates an amount of CO₂ emissions of each other-product direct-use device. The calculation unit 1002 sums up the amounts of CO₂ emissions of the other-product direct-use devices to calculate an amount of CO₂ emissions related to the fuel used.

The calculation unit 1002 sums up the amounts of CO₂ emissions related to electric power and the amounts of CO₂ emissions related to fuel, to calculate an "amount 1 of CO₂ emissions of other-product direct-use devices" regarding the product Z1. The calculation unit 1002 associates the "amount 1 of CO₂ emissions of other-product direct-use devices" regarding the product Z1 with the "manufacturing number a" of the product Z1.

The calculation unit 1002 calculates an "amount m of CO₂ emissions of indirect-use devices" regarding the product Z1 in the manufacturing step, by using the "usage rate e for each electric power supply", the "CO₂ emission amount coefficient f for each electric power supply type", the "amount g of electric power consumption" of each direct-use device, the "CO₂ emission amount coefficient h for each fuel type", the "fuel consumption amount i" of each indirect-use device, and the type of fuel. The "amount m of CO₂ emissions of indirect-use devices" is the sum of the amounts of CO₂ emissions generated due to the electric power and fuel consumed by each indirect-use device. The "amount m of CO₂ emissions of indirect-use devices" regarding the product Z1 is an example of information included in the information regarding the CO₂ emissions of the devices used for the product Z1.

The calculation unit 1002 multiplies the "amount g of electric power consumption" of each indirect-use device by the "usage rate e for each electric power supply" to calculate an electric power consumption for each electric power supply type. It should be noted that where the "usage rate e for each electric power supply" differs depending upon the time periods, the calculation unit 1002 may decompose the "amount g of electric power consumption" of each indirect-use device into electric power consumptions for the time periods and multiply the electric power consumption of each time period by the "usage rate e for each electric power supply" of each time period. With respect to each indirect-use device, the calculation unit 1002 multiplies each of the amounts of electric power consumptions for the electric power supply types by the "CO₂ emission amount coefficient f for each electric power supply" to calculate an amount of CO₂ emissions for each electric power supply type. With respect to the indirect-use devices, the calculation unit 1002 sums up the amounts of CO₂ emissions for each electric power supply type. The calculation unit 1002 sums up the amounts of CO₂ emissions of the indirect-use devices, and calculates an amount of CO₂ emissions related to the electric power used.

The calculation unit 1002 multiplies the "fuel consumption amount i" of each indirect-use device by the "CO₂ emission amount coefficient h for each fuel type" corresponding to the type of fuel consumed by each indirect-use device, and calculates an amount of CO₂ emissions of each indirect-use device. The calculation unit 1002 sums up the amounts of CO₂ emissions of the indirect-use devices to calculate an amount of CO₂ emissions related to the fuel used.

The calculation unit 1002 sums up the amounts of CO₂ emissions related to electric power and the amounts of CO₂ emissions related to fuel, to calculate an "amount m of CO₂ emissions of indirect-use devices" regarding the product Z1. The calculation unit 1002 associates the amount m of CO₂ emissions of indirect-use devices" regarding the product Z1 with the "manufacturing number a" of the product Z1.

The calculation unit 1002 calculates an "amount n of CO₂ emissions" related to the product Z1 generated in the manufacturing step, in consideration of the information regarding the CO₂ emissions of the product Z1 and the information regarding the CO₂ emissions of the devices used for the product Z1. The "amount n of CO₂ emissions" is the amount of CO₂ emissions that are generated for the production of this product, whether directly or indirectly, during the manufacturing step of the product. For example, the calculation unit 1002 calculates an "amount n of CO₂ emissions" of the product Z1 by using the "amount j of product CO₂ emissions", the "amount k of CO₂ emissions of direct-use devices", the "amount 1 of CO₂ emissions of other-product direct-use devices", and the "amount m of CO₂ emissions of indirect-use devices".

The calculation unit 1002 calculates an "amount n of CO₂ emissions" of the product Z1 by using the following formula:
"amount n of CO₂ emissions" = "amount j of product CO₂ emissions" + "amount k of CO₂ emissions of direct-use devices" + {"amount m of CO₂ emissions of indirect-use devices" × "amount k of CO₂ emissions of direct-use devices" / ("amount k of CO₂ emissions of direct-use devices"+ amount 1 of CO₂ emissions of other-product direct-use devices")}

The ("amount k of CO₂ emissions of direct-use devices" / ("amount k of CO₂ emissions of direct-use devices"+ "amount 1 of CO₂ emissions of other-product direct-use devices") shown in the above formula is a coefficient for appropriately allocating the "amount m of CO₂ emissions of indirect-use devices" to the amount of CO₂ emissions of a target product (e.g., product Z1) for each arbitrary "operation time d". The coefficient for allocating the "amount m of CO₂ emissions of indirect-use devices" is not limited to this. The coefficient for allocating the "amount m of CO₂ emissions of indirect-use devices" is only required to allocate part of the "amount m of CO₂ emissions of indirect-use devices" to the product Z1, and the "amount 1 of CO₂ emissions of other-product direct-use devices" need not be used. Thus, the calculation unit 1002 can appropriately allocate, to the product Z1, part of the amount of CO₂ emissions of the device commonly used for a plurality of products in the plant X that manufactures the product Z1.

The first storage control unit 1003 controls the storage unit 11 to store the amount of CO₂ emissions generated in each of the steps and calculated by the calculation unit 1002, in association with the product Z1 (step S12). In step S12, for example, the first storage control unit 1003 stores in the CO₂ emission amount database 118 the amount of CO₂ emissions generated in the manufacturing step ("amount n of CO₂ emissions" regarding the product Z1) in association with the product name (the name of the product Z1) and the product number (the "product number a" of the product Z1). The first storage control unit 1003 can store in the CO₂ emission amount database 118 the "operation time d", the usage rate e for each electric power supply", the "CO₂ emission amount coefficient f for each electric power supply type ", the "amount g of electric power consumption", the "CO₂ emission amount coefficient h for each fuel type ", the "fuel consumption amount i", the type of fuel, the" amount j of product CO₂ emissions", the "amount k of CO₂ emissions of direct-use devices", the "amount 1 of CO₂ emissions of other-product direct-use devices", and the "amount m of CO₂ emissions of indirect-use devices", in association with the product name (the name of the product Z1) and the product number (the "product number a" of the product 21).

Although the manufacturing step of the product Z1 has been described as an example in the above, the information processing device 1 can similarly calculate an "amount n of CO₂ emissions" which the product Z1 generates in steps other than the manufacturing step, as described below.

In step S11, the first acquisition unit 1001 refers to the electric power consumption history database and acquires "product number a" of the product Z1. The electric power consumption history database stores an electric power consumption history of each step. The electric power consumption history database is configured similarly to the electric power consumption history database 113 for each manufacturing plant. The electric power consumption history database may be stored in the storage unit 11. The first acquisition unit 1001 refers to the electric power consumption history database and the fuel consumption history database, and acquires a "direct-use device number b" of each direct-use device with respect to the product Z1. The fuel consumption history database stores the fuel consumption history of each step. The fuel consumption history database is configured similarly to the fuel consumption history database 114 of each manufacturing plant. The fuel consumption history database may be stored in the storage unit 11. The first acquisition unit 1001 refers to the electric power consumption history database and the fuel consumption history database, and acquires an "indirect-use device number c" of each indirect-use device with respect to the product Z1.

The first acquisition unit 1001 refers to the operation time history database and acquires an "operation time d" associated with the "product number a" of the product Z1. The operation time history database stores the operation time history of each step. The operation time history database is configured similarly to the operation time history database 115 for each manufacturing plant. The operation time history database may be stored in the storage unit 11. The first acquisition unit 1001 refers to the operation time history database and acquires an "operation time d" associated with the "direct-use device number b" of the direct-use devices of the product Z1. The first acquisition unit 1001 refers to the operation time history database and acquires an "operation time d" associated with the device number of each other-product direct-use device of the product Z1. The first acquisition unit 1001 refers to the operation time history database and acquires the "operation time d" associated with the "indirect-use device number c" of each indirect-use device of the product Z1.

The first acquisition unit 1001 refers to the electric power purchase history database, and acquires a "usage rate e for each electric power supply" of the electric power that is used by the product Z1 and devices related to the product Z1 (i.e., direct-use devices, other-product direct-use devices, and indirect-use devices). That is, the first acquisition unit 1001 acquires a "usage rate e for each electric power supply" which is according to the location (the location of use, etc.) where the product Z1 is present in each of the plurality of steps. The electric power purchase history database stores an electric power purchase history of each step. The electric power purchase history database is configured similarly to the electric power purchase history database 112 for each manufacturing plant. The electric power purchase history database may be stored in the storage unit 11. Depending upon the step being executed, the first acquisition unit 1001 can refer to the electric power sales history database 111 of each power retailer and acquire the "usage rate e of each electric power supply" according to the location where the product Z1 is present in each step.

The first acquisition unit 1001 refers to the CO₂ emission amount coefficient database 116 for each electric power supply type and acquires a "CO₂ emission amount coefficient f for each electric power supply type" which is according to the location where the product Z1 is present in each step.

The first acquisition unit 1001 refers to the electric power consumption history database, and acquires an "amount g of electric power consumption" which the product Z1 consumes in the "operation time d" associated with the "product number a" of the product Z1. The first acquisition unit 1001 refers to the electric power consumption history database, and acquires the "amount g of electric power consumption" which each direct-use device consumes in the "operation time d" associated with the "direct-use device number b" of each direct-use device of the product Z1. The first acquisition unit 1001 refers to the electric power consumption history database, and acquires an "amount g of electric power consumption" which each of other-product direct-use devices consumes in the "operation time d" associated with the device number of each of other-product direct-use devices. For example, in the usage step, other-product direct-use devices are devices that are solely used by other products in a finished product (such as a car or an office building) in which the product Z1 is present. The first acquisition unit 1001 refers to the electric power consumption history database, and acquires "amount g of electric power consumption" which each indirect-use device consumes in the "operation time d" associated with the "indirect-use device number c" of the indirect-use devices present in the plant X that manufactures the product Z1.

The first acquisition unit 1001 refers to the CO₂ emission amount coefficient database 117 for each fuel type and acquires a "CO₂ emission amount coefficient h of each fuel type".

The first acquisition unit 1001 refers to the fuel consumption history database, and acquires a "fuel consumption amount i" and the type of fuel which the product Z1 consumes in the "operation time d" associated with the "product number a" of the product Z1. The first acquisition unit 1001 refers to the fuel consumption history database, and acquires the "fuel consumption amount i" and the type of fuel which each direct-use device consumes in the "operation time d" associated with the "direct-use device number b" of each direct-use device of the product Z1. The first acquisition unit 1001 refers to the fuel consumption history database 114 for each manufacturing plant, and acquires "fuel consumption amount i" and the type of fuel which each of other-product direct-use devices consumes in the "operation time d" associated with the device number of each of other-product direct-use devices. The first acquisition unit 1001 refers to the fuel consumption history database, and acquires "fuel consumption amount i" which each indirect-use device consumes in the "operation time d" associated with the "indirect-use device number c" of the indirect-use devices present in the plant X that manufactures the product Z1.

In step S11, the calculation unit 1002 calculates an "amount j of product CO₂ emissions" of the product Z1 generated in each step, by using the "usage rate e for each electric power supply", the "CO₂ emission amount coefficient f for each electric power supply type", the "amount g of electric power consumption" of the product Z1, the "CO₂ emission amount coefficient h for each fuel type", the "fuel consumption amount i" of the product Z1 and the type of fuel. The calculation unit 1002 calculates an "amount k of CO₂ emissions of direct-use devices" regarding the product Z1, by using the "usage rate e for each electric power supply", the "CO₂ emission amount coefficient f for each electric power supply type", the "amount g of electric power consumption" of each direct-use device, the "CO₂ emission amount coefficient h for each fuel type", the "fuel consumption amount i" of each direct-use device, and the type of fuel. The calculation unit 1002 calculates an "amount 1 of CO₂ emissions of other-product direct-use devices" regarding the product Z1, by using the "usage rate e for each electric power supply", the "CO₂ emission amount coefficient f for each electric power supply type", the "amount g of electric power consumption" of each other-product direct-use device, the "CO₂ emission amount coefficient h for each fuel type", the "fuel consumption amount i" of each other-product direct-use device, and the type of fuel. The calculation unit 1002 calculates an "amount m of CO₂ emissions of indirect-use devices" regarding the product Z1, by using the "usage rate e for each electric power supply", the "CO₂ emission amount coefficient f for each electric power supply type", the "amount g of electric power consumption" of each direct-use device, the "CO₂ emission amount coefficient h for each fuel type", the "fuel consumption amount i" of each indirect-use device, and the type of fuel.

The calculation unit 1002 calculates an "amount n of CO₂ emissions" related to the product Z1 and generated in each of a plurality of steps, in consideration of the information regarding the CO₂ emissions of the product Z1 and the information regarding the CO₂ emissions of the devices used for the product Z1. For example, the calculation unit 1002 calculates an "amount n of CO₂ emissions" of the product Z1 in each step by using the "amount j of product CO₂ emissions", the "amount k of CO₂ emissions of direct-use devices", the "amount 1 of CO₂ emissions of other-product direct-use devices", and the "amount m of CO₂ emissions of indirect-use devices".

In step S13, the first storage control unit 1003 stores in the CO₂ emission amount database 118 the amount of CO₂ emissions generated in the manufacturing steps (amount n of CO₂ emissions regarding the product Z1) in association with the product name (the name of the product Z1) and the product number (the "product number a" of the product Z1).

Although the product Z1 has been described as an example in the above, the information processing device 1 can similarly calculate an "amount n of CO₂ emissions" which various products other than the product Z1 generate in their steps.

### (Prediction Model Generation Processing)

FIG. 6 is a flowchart showing how the information processing device 1 executes the generation processing of a prediction model and also shows the contents of that processing. By way of example, the manufacturing step will be described.

The second acquisition unit 1004 acquires from the storage unit 11 data which the generation unit 1005 uses to generate a prediction model (step S20). In step S20₁ for example, the second acquisition unit 1004 acquires, from the CO₂ emission amount database 118, information on electric power, information on fuel, and the amount of CO₂ emissions generated in each of a plurality of steps for a plurality of products of the same type. A plurality of products of the same type are products that have the same product name but have different product numbers. Preferably, the second acquisition unit 1004 considers the location of each step in addition to the type of product, and acquires from the CO₂ emission amount database 118 the information on electric power, the information on fuel, and the amount of CO₂ emissions generated in each of the plurality of steps in each location.

Where the manufacturing step is taken as an example, the second acquisition unit 1004 acquires from the storage unit 11 information on electric power and information on fuel in the manufacturing steps, and the amounts of CO₂ emissions generated in the manufacturing steps for a plurality of products of the same type. For example, the second acquisition unit 1004 acquires an "operation time d" as information included in at least one of the information on electric power and the information on fuel. The second acquisition unit 1004 acquires a "usage rate e for each electric power supply", a "CO₂ emission amount coefficient f for each electric power supply type", and an "amount g of electric power consumption" as information included in the information on electric power. The second acquisition unit 1004 acquires a "CO₂ emission amount coefficient h for each fuel type", a "fuel consumption amount i", and a fuel type as information included in the information on fuel. The second acquisition unit 1004 acquires an "amount n of CO₂ emissions" as the amount of CO₂ emissions generated in the manufacturing step.

Using the data acquired by the second acquisition unit 1004, the generation unit 1005 generates a prediction model for each step, by which the amount of CO₂ emissions which may be generated in each of the steps of the distribution process is predicted (step S21).

In step S21, the generation unit 1005 generates a prediction model for each step of each product type. Preferably, the generation unit 1005 generates a prediction model for each location where each step is performed for each type of product. For example, the generation unit 1005 performs machine learning using the data acquired by the second acquisition unit 1004 as training data, and generates a prediction model for each step for each type of product. A prediction model is a trained model that predicts an amount of CO₂ emissions generated by this step based on the start and duration of the step.

The "usage rate e for each electric power supply", the "CO₂ emission amount coefficient f for each electric power supply type", the "CO₂ emission amount coefficient h for each fuel type", the "fuel consumption amount i" and the type of fuel can change in accordance with changes in society. The "usage rate e for each electric power supply", the "CO₂ emission amount coefficient f for each electric power supply type", the "CO₂ emission amount coefficient h for each fuel type", the "fuel consumption amount i consumption" and the type of fuel can vary and therefore have effects on the "amount n of CO₂ emissions". Therefore, there is a certain correlation between the start of a step and the amount of CO₂ emissions generated in this step.

The "operation time d" corresponds to the duration of the step. The "amount g of electric power consumption" changes in accordance with the "operation time d". The "operation time d" and "amount g of electric power consumption" are data that fluctuate in accordance with the period of the step. The "operation time d" and the "amount g of electric power consumption" may fluctuate and therefore have effects on the "amount n of CO₂ emissions". Therefore, there is a certain correlation between the duration of the step and the amount of CO₂ emissions generated in the step.

Various methods of supervised learning can be applied to machine learning. Teacher data can be added as appropriate. Thus, the prediction models can be updated accordingly.

The second storage control unit 1006 controls the storage unit 11 to store a prediction model generated by the generation unit 1005 (step S22). In step S22, the second storage control unit 1006 stores a prediction model in the prediction model database 119 in association with each step and for each type of product. Preferably, the second storage control unit 1006 stores the prediction model in the prediction model database 119 for each type of product and in association with the location where each step is performed.

It should be noted that in step S21, the generation unit 1005 may correct the prediction model, based on the comparison between the amount of CO₂ emissions which is predicted using the prediction model and the amount of CO₂ emissions which the calculation unit 1002 calculates for a new product of the same type. If the difference between the predicted amount of CO₂ emissions and the calculated amount of CO₂ emissions exceeds an error range, the generation unit 1005 corrects the prediction model to make that difference smaller. For example, the generation unit 1005 can update an algorithm formula or coefficients in the prediction model. This improves the prediction accuracy of the prediction model.

### (Determination Processing of Environmental Load Equivalent Amount)

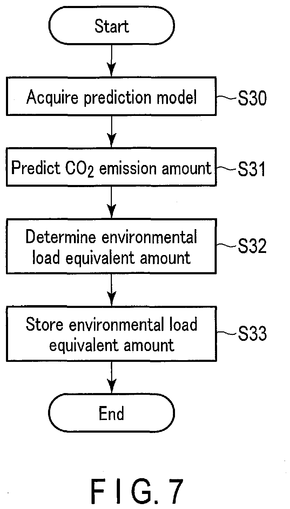

FIG. 7 is a flowchart showing how the information processing device 1 executes the determination processing of an environmental load equivalent amount of a target product and also shows the contents of that processing. A product Z2 will be described as an example of the target product. Unless otherwise specified, it is assumed that the product Z2 is a product that has been manufactured. The manufacturing step of the distribution process is a finished step. Of the plurality of steps of the distribution process, the steps other than the manufacturing step are unfinished steps.

The third acquisition unit 1007 acquires from the storage unit 11 a prediction model which the prediction unit 1008 is to use for the prediction of an amount of CO₂ emissions (step S30). In step S30, for example, the third acquisition unit 1007 acquires a prediction model related to the product Z2 from the prediction model database 119. The prediction model associated with the product Z2 is a prediction model associated with the product name of the product Z2. The prediction model associated with the product name of the product Z2 is predicted by the prediction unit 1008 by using data on a plurality of products which are of the same type as the product Z2.

Using the prediction model acquired by the third acquisition unit 1007, the prediction unit 1008 predicts the amount of CO₂ emissions generated in each of one or more unfinished steps which are included in the steps performed for the product Z2 (step S31). In step S31, for example, the prediction unit 1008 inputs the start time and duration of each unfinished step to the prediction model for each unfinished step, and acquires an amount of CO₂ emissions generated in each unfinished step as an output from each prediction model. The start time and the duration of each unfinished step are information inputted by the user to the information processing device 1. For example, the prediction unit 1008 inputs the start time and duration of the usage step to the prediction model of the usage step, and acquires an amount of CO₂ emissions generated in the usage step as an output from the prediction model of the usage step.

Preferably, the prediction unit 1008 predicts an amount of CO₂ emissions generated in each of one or more unfinished steps, using a prediction model corresponding to the location where each of the one or more unfinished steps is performed. The location where each of the one or more unfinished steps is performed is information inputted by the user to the information processing device 1.

The prediction unit 1008 can predict an amount of CO₂ emissions for all unfinished steps which are included in the plurality of steps of the distribution process. For example, the prediction unit 1008 predicts an amount of CO₂ emissions for all unfinished steps which are included in the plurality of steps of the distribution process and which are other than the manufacturing step. The prediction unit 1008 can predict an amount of CO₂ emissions for some unfinished steps which are included in the plurality of steps of the distribution process. For example, the prediction unit 1008 predicts an amount of CO₂ emissions for some unfinished steps which are included in the plurality of steps of the distribution process and which are other than the manufacturing step. The unfinished steps to be predicted can be selected by the user.

Where all steps of the distribution process are unfinished steps, the prediction unit 1008 can predict an amount of CO₂ emissions for all of the plurality of steps. Alternatively, the prediction unit 1008 can predict an amount of CO₂ emissions for some of the plurality of steps.

The determination unit 1009 determines an environmental load equivalent amount of the product Z2, using the amount of CO₂ emissions predicted by the prediction unit 1008 (step S32). In step S32, for example, the determination unit 1009 determines an environmental load equivalent amount of the product Z2, based on the amount of CO₂ emissions generated in each of the one or more finished steps and calculated by the calculation unit 1002 and on the amount of CO₂ emissions generated in each of the one or more unfinished steps and predicted by the prediction unit 1008. In the description below, the amount of CO₂ emissions calculated by the calculation unit 1002 will be also referred to as an actual value of the amount of CO₂ emissions. The amount of CO₂ emissions predicted by the prediction unit 1008 will be also referred to as a predicted value of the amount of CO₂ emissions.

In this example, the determination unit 1009 acquires from the CO₂ emission amount database 118 an amount of CO₂ emissions generated in the manufacturing step which is among the plurality of steps and calculated by the calculation unit 1002. The determination unit 1009 acquires an amount of CO₂ emissions which the prediction unit 1008 predicts for each of all or some of the unfinished steps other than the manufacturing step. The determination unit 1009 determines an environmental load equivalent amount of the product Z2, based on the actual value of the amount of CO₂ emissions calculated by the calculation unit 1002 and the predicted value of the amount of CO₂ emissions obtained by the prediction unit 1008. The relationships of how the environmental load equivalent amount is related to the actual and predicted values of the amount of CO₂ emissions are set as appropriate. For example, the determination unit 1009 determines an environmental load equivalent amount at the time of sale of the product Z2, which is after the manufacturing step (before the usage step).

Where the product has not yet been manufactured and there is no finished step, the determination unit 1009 can determine an environmental load equivalent amount of the product Z2 as below. For example, the determination unit 1009 determines an environmental load equivalent amount of the product Z2, based on the amount of CO₂ emissions which the prediction unit 1008 predicts for the product Z2 as being generated in each of the one or more unfinished steps included in the plurality of steps. In this example, the determination unit 1009 acquires the amount of CO₂ emissions which the prediction unit 1008 predicts as being generated in each of all or some of the unfinished steps included in the plurality of steps. The determination unit 1009 determines an environmental load equivalent amount of the product Z2, based on the predicted value of the amount of CO₂ emissions obtained by the prediction unit 1008. For example, the determination unit 1009 determines the environmental load equivalent amount when the product Z2 is made by order, i.e., before it is manufactured.

It should be noted that the determination unit 1009 can determine the price of the product Z, based on the environmental load equivalent amount. For example, the determination unit 1009 determines the price of the product Z in consideration of the environmental load equivalent amount in addition to the cost and profit of the product Z. The method of determining the price of the product Z is not limited to a specific method as long as the environmental load equivalent amount is added to the price.

The third storage control unit 1010 controls the storage unit 11 to store the predicted value of the amount of CO₂ emissions and the environmental load equivalent amount determined by the determination unit 1009 (step S33). In step S33, for example, the third storage control unit 1010 stores in the CO₂ emission amount database 118 the predicted value of the amount of CO₂ emissions generated in each step in association with the product name (the name of the product Z2) and the product number (the "product number a" of the product Z2). For example, the third storage control unit 1010 can store in the CO₂ emission amount database 118 the environmental load equivalent amount determined by the determination unit 1009 in association with the product name (the name of the product Z2) and the product number ("product number a" of the product Z2).

The actual value of the amount of CO₂ emissions, the predicted value of the amount of CO₂ emissions and the environmental load equivalent amount described above are used in EC transactions between business operators or in product transactions performed in a system, such as online auctions. In the description below, a transaction example in which a new product or a secondhand product is purchased or used (renting or the like) will be described.

A prospective purchaser or user of a product uses the terminal 7 and inputs the following information as conditions for purchase or use to the transaction software. (A1) product category: information for searching for a product which the prospective purchaser or user desires

For example, the product category includes a product type, such as a 2-ton truck and a 3LDK condominium in Tokyo, a genre, a name, a region, etc.
(A2) product number: an identification number that uniquely identifies the product

The product number can be omitted where a product is searched for based on catalog specifications information or the like. The product number is automatically acquired where the product which the prospective purchaser or user desires is selected.
(A3) catalog specifications: information on product functions or performance

For example, the catalog specifications include a manufacturer's name, a seller's name, a brand name, a shape, a weight, a size, a mechanical strength, a color, a speed, an electric power consumption, a fuel efficiency, etc.
(A4) new/secondhand product identification flag: information specifying which of a new product or a secondhand product is desired

The new/secondhand product identification flag is entered where it is specified whether a new product is purchased or used or a secondhand product is purchased or used.
(A5) desired payment amount: the upper limit and lower limit of the amount that can be paid for the product purchased or used

The desired payment amount may be omitted.
(A6) allowable amount of CO₂ emissions: an allowable amount of CO₂ emissions for each step of the product which the prospective purchaser or user desires.

Where the prospective purchaser or user thinks it hard to set a specific figure of an allowable amount of CO₂ emissions, an expected value described below can be entered. For example, the expected value can be expressed as "less than the average value of products of the same category", "8 or more on a scale of 10", "a deviation value of 60 or more", "below the legal standard", "international standard XX certificate", or the like.
(A7) priority: priority flag indicating the order of importance in which a product is purchased or used under the above conditions (A3), (A4), (A5) and (A6).

For example, the priority is expressed as 1st, 2nd, or the like.

Where the priority is omitted, the transaction broker support device 8 presents the prospective purchaser or user with recommended products in accordance with the order of sales or the order of customer evaluation.
(A8) product/usage plan: purpose and usage plan about the product which the prospective purchaser or user wishes to purchase or use

For example, the product/usage plan includes intended use, a scheduled start date and time of use, a scheduled period of use, a scheduled usage amount (the number of times, the number of revolutions, a travel distance, etc.), a scheduled usage frequency, a scheduled usage location, etc.

The product seller or provider uses the transaction broker support device 8 and registers the following information in the transaction broker software in advance.
(B1) product number: an identification number that uniquely identifies the product
(B2) catalog specifications: information on product functions or performance
(B3) amount of CO₂ emissions during manufacturing: an actual value of the amount of CO₂ emissions generated in the manufacturing step of the product

The amount of CO₂ emissions during manufacturing is a value calculated by the calculation unit 1002.

In the case where the product is made by order, the amount of CO₂ emissions during the making is a predicted value of the amount of CO₂ emissions. In this case, the amount of CO₂ emissions during the making is a value predicted by the prediction unit 1008.
(B4) amount of CO₂ emissions during use: a predicted value of the amount of CO₂ emissions generated during the usage step of the product

The amount of CO₂ emissions during use is a value predicted by the calculation unit 1002.

In the case of a secondhand product, the amount of CO₂ emissions during use is a value calculated by the calculation unit 1002.
(B5) amount of CO₂ emissions at the time of delivery: a predicted value of the amount of CO₂ emissions generated in the product shipping (delivery) step

The amount of CO₂ emissions at the time of delivery is a value predicted by the prediction unit 1008. Since the amount of CO₂ emissions at the time of delivery differs depending upon the delivery location (prefecture, etc.), a value determined for each delivery location is registered.
(B6) desired sales/providing price: upper and lower limits of the price for selling or providing the product

The transaction broker support device 8 acquires an environmental load equivalent amount of the product from the information processing device 1, and automatically determines a desired sales/providing price in consideration of the environmental load equivalent amount.

It should be noted that the product seller/provider may register a predicted value of the amount of CO₂ emissions with respect to the unfinished steps other than the manufacturing step, the shipping (delivery) step and the usage step.

The transaction broker support device 8 acquires the following information from the past transaction history or the like, using transaction broker software:
(C1) request conditions entered by individual purchasers/users in the past
(C2) product number of each of the products that were traded in the past, catalog specifications, actual and predicted values of the amount of CO₂ emissions in each step, and agreed transaction prices

The transaction broker support device 8 acquires the above information (A1) to (A8) from the terminal 7. The transaction broker support device 8 inputs the information (A1) to (A8), the information (B1) to (B6), and the information (C1) to (C2) to the transaction broker software, and outputs the following information (D1) to (D8) to the transaction software of the terminal 7.
(D1) candidate product number: the product number of a candidate product that satisfies the conditions entered by the prospective purchaser/user

The transaction broker support device 8 searches the product list database for a candidate product that satisfies the conditions entered by the prospective purchaser/user, and identifies the candidate product number.
(D2) catalog specifications of candidate product: information on the function or performance of the candidate product
(D3) new/secondhand product identification flag: information specifying whether the candidate product is a new product or a secondhand product
(D4) sales/providing price: the price of the candidate product including the environmental load equivalent amount

The environmental load equivalent amount may be indicated together with the sales/providing price.
(D5) amount of CO₂ emissions during manufacturing: actual value of the amount of CO₂ emissions generated in the manufacturing step of the candidate product

In the case where the product is made by order, the amount of CO₂ emissions during the making is a predicted value of the amount of CO₂ emissions.
(D6) amount of CO₂ emissions during use: predicted value of the amount of CO₂ emissions generated during the usage step of the product

In the case of a secondhand product, the amount of CO₂ emissions during use is an actual value of the amount of CO₂ emissions.
(D7) amount of CO₂ emissions at the time of delivery: a predicted value of the amount of CO₂ emissions generated in the product shipping (delivery) step
(D8) requirement achievement level score: evaluation of how the above values (D2) to (D7) are satisfied (excellent) in light of the conditions and priority entered by the prospective purchaser/user, and presentation of a percentage value (e.g., 95%) or stars for each evaluation item

The terminal 7 can display the information on (D1) to (D8). Thus, the prospective purchaser or user can finalize the ordering/bidding after confirming the information displayed on the terminal 7. Alternatively, the terminal 7 can automatically place an order or make a bid by digitizing the priority of the products to be purchased/used by use of the transaction software, based on the information on (D1) to (D8).

The transaction broker support device 8 can provide the prospective purchaser or user with digital data (numerical scores) that represents information on actual and predicted values of the amount of CO₂ emissions along with information on the product performance specifications and the delivery date. Thus, the prospective purchaser or user can automatically calculate a desired payment amount of each product by using the transaction software of the terminal 7.

The seller or provider can also determine a desired sales price by referring to the desired payment amount presented by the prospective purchaser or user for each product. In addition, the seller or provider can easily reset and optimize target values of the amounts of CO₂ emissions for products to be manufactured and sold in the future, in accordance with the needs of the prospective purchaser or user.

### (Operations and Advantages)

As described above, according to one embodiment, the information processing device 1 calculates an amount of CO₂ emissions generated in each of the plurality of steps of the product distribution process, by using the information on electric power and the information on fuel.

Thus, the information processing device 1 can trace the amount of CO₂ emissions in the product distribution process. The information processing device 1 can save the amount of CO₂ emissions of each of the plurality of steps of each product such that the amount of CO₂ emissions can be viewed on a platform. The information processing device 1 can associate the amount of CO₂ emissions with metadata that can be classified according to a location where various steps including manufacturing, use, recovery, and reuse are performed, or according to a manufacturer, a user, a collector, a reuser, and an electric power supplier. Owing to this, detailed analysis and tabulation of each product can be performed for each step, for each device used, for each type of electric power supply, for each time period, etc. In addition, analysis and tabulation can be performed for user attributes (in the case of a corporation, a branch of industry, a corporate name, a department name, etc.; in the case of a natural person, an age, a gender, an occupation, etc.), purposes of use (business use, military use, civilian use, transportation use, etc.), an electricity retailer, a time period, a season, an era, a frequency of use, an accumulated time of use, etc.

The information processing device 1 can manage the amounts of CO₂ emissions of each product that are calculated based on a rule (algorithm) common to the platform. As a result, the information processing device 1 can manage the amount of CO₂ emissions, with the risk of falsification and fabrication being reduced, as compared with the manufacturer's or seller's management based on self-management or self-reporting. In addition, the reliability of CO₂ emission amount data can also be kept at a high level. The information processing device 1 can fairly and appropriately compare and evaluate the amounts of CO₂ emissions for products handled by various business operators in Japan and overseas. Since each business operator does not have to calculate the amount of CO₂ emissions of the products it handles, the processing load will be reduced.

According to one embodiment, the information processing device 1 calculates the amounts of CO₂ emissions generated in a plurality of steps, using the usage rate for each electric power supply and the type of fuel.

Thus, the information processing device 1 can improve the calculation accuracy of the CO₂ emission amount by considering the usage rate for each electric power supply and the type of fuel which may have effects on the amounts of CO₂ emissions.

According to one embodiment, the information processing device 1 uses the usage rate for each electric power supply in accordance with the location where the product is present in each of a plurality of steps.

Thus, the information processing device 1 can appropriately calculate the amount of CO₂ emissions of each step even if the location of the product differs for each step, as in the case where the manufacturing step is performed in Japan and the usage step is performed in another country.

According to one embodiment, the information processing device 1 calculates the amount of CO₂ emissions of each of a plurality of steps in consideration of information on the amounts of CO₂ emissions of products and information on the amounts of CO₂ emissions of devices used for the products.

Thus, the information processing device 1 can appropriately calculate the amount of CO₂ emissions which may have been generated in each step of a product either directly or indirectly.

According to one embodiment, the information processing device 1 can generate a prediction model of each step, for each of the product types.

Thus, the information processing device 1 can predict the amount of CO₂ emissions of the product for each step with high accuracy. For example, the information processing device 1 can predict the amount of CO₂ emissions with high accuracy even where other similar products are used by other users.

Furthermore, even where the renewable energy usage rate of each business operator changes rapidly or gradually for each location (country, region, etc.), the information processing device 1 can improve the accuracy of short-term prediction values or medium- to long-term prediction values of the amount of CO₂ emissions in each step of the product and provide accurate data to the purchaser and user. Thus, governments, local governments, industry groups, etc. can set a target and regulate the amount of CO₂ emissions in the manufacturing to reuse steps of industrial products of a specific field or a specific purpose of use, by enacting laws and ordinances for related corporations and individuals. Furthermore, the governments, local governments, industry groups, etc. can easily monitor and manage the achievement status, and the reduction of the amount of CO₂ emissions in society as a whole can be accelerated systematically.

According to one embodiment, the information processing device 1 can predict the amounts of CO₂ emissions generated in unfinished steps.

Thus, the manufacturer or seller can disclose to the purchaser or user the actual and predicted values of the amounts of CO₂ emissions as data (parameters) necessary for the selection (decision making) of a product to be purchased or used. The purchaser or user can use the disclosed amounts of CO₂ emissions as one of the criteria for purchasing the product.

In addition, for example, by having a prospective purchaser/user answer a questionnaire in advance about product attributes, purposes of use, places of use, etc., the manufacturer or seller can present actual amounts of CO₂ emissions in the product manufacturing step to the delivery process. Along with this, the manufacturer or seller can present to the prospective purchaser or user a predicted value of the amount of future CO₂ emissions in the form of a message such as "If you use this product, the predicted value of the amount of CO₂ emissions for the next two years is XX tons", which is helpful in making a decision about the purchase or use. Furthermore, if a carbon tax or a fine is imposed by a legal system, the amount of CO₂ emissions can be multiplied by a statutory coefficient or the like, and the resultant amount can be presented.

In addition, by comparing the predicted value of the amount of CO₂ emissions in the usage step with the actual value of the amount of CO₂ emissions generated as a result of the user's actual use of the product, the difference can be analyzed for each attribute, each purpose of use, and each location of use, using AI, and the reason for the difference can be specified. As a result, the error range of predicted values of the amount of CO₂ emissions can be calculated and presented from responses to a pre-questionnaire that will be conducted thereafter, and a probable predicted value of the amount of CO₂ emissions can be estimated and presented by automatically correcting the error range in consideration of the psychological biases of respondents answering the pre-questionnaire.

In addition, where a treaty, law, an ordinance, etc. set a cap on the amount of CO₂ emissions and impose additional penalties such as taxes on those who use products that exceed the cap, certification marks based on third-party certification can be added to excellent products with a reduced amount of CO₂ emissions, so that the prospective purchaser or user can easily select suitable products for purchase or use.

According to one embodiment, the information processing device 1 can determine an environmental load equivalent amount of the product, using the predicted value of the amount of CO₂ emissions.

Thus, the information processing device 1 can determine an appropriate environmental load equivalent amount in consideration of the predicted values of the amounts of CO₂ emissions of unfinished steps.

According to one embodiment, the information processing device 1 can determine a price of a product, based on the environmental load equivalent amount of the product that is determined using the predicted value of the amount of CO₂ emissions.

Thus, the information processing device 1 can determine an appropriate price of the product in consideration of the predicted values of the amounts of CO₂ emissions of unfinished steps.

Although the embodiment of the present invention has been described in detail, the above description is merely illustrative of the present invention in every respect. Needless to say, various improvements and modifications can be made without departing from the scope of the present invention. That is, in implementing the present invention, a specific configuration according to the embodiment may be appropriately adopted.

That is, the present invention is not limited to the above-described embodiment and can be embodied in practice by modifying the structural elements without departing from the gist of the invention. In addition, various inventions can be made by properly combining the structural elements disclosed in connection with the above embodiment. For example, some of the structural elements may be deleted from the embodiment. Furthermore, structural elements of different embodiments may be combined.

### REFERENCE SIGNS LIST

1 Information Processing Device
2-1 to 2-6 Power Generator Management System
3 Power Transmission Company Management System
4 Power Retailer Management System
5 Manufacturing Plant Energy Management System
6 Production Management System
7 Terminal
8 Transaction Broker Support Device
10 Control Unit
11 Storage Unit
12 Communication Interface (Communication I/F)
13 Bus
31 Procurement/Transmission History Database For Each Power Retailer
41 Electric Power Sales History Database
51 Electric Power Purchase History Database
52 Electric Power Consumption History Database
53 Fuel Consumption History Database
61 Operation Time History Database
111 Electric Power Sales History Database For Each Power Retailer
112 Electric Power Purchase History Database For Each Manufacturing Plant
113 Electric Power Consumption History Database For Each Manufacturing Plant
114 Fuel Consumption History Database For Each Manufacturing Plant
115 Operation Time History Database For Each Manufacturing Plant
116 CO₂ Emission Amount Coefficient Database For Each Electric Power Supply Type
117 CO₂ Emission Amount Coefficient Database For Each Fuel Type
118 CO₂ Emission Amount Database
119 Prediction Model Database
1001 First Acquisition Unit
1002 Calculation Unit
1003 First Storage Control Unit
1004 Second Acquisition Unit
1005 Generation Unit
1006 Second Storage Control Unit
1007 Third Acquisition Unit
1008 Prediction Unit
1009 Determination Unit
1010 Third Storage Control Unit
NW Network
S Information Processing System
X Plant
X1 Air Conditioner
X2 Lighting Device
X3 Manufacturing Device
X4 Manufacturing Device
X5 Manufacturing Device
X6 Private Electric Power Generator
X7 Boiler
X8-X12 Electric Power Consumption Meter
X13-X14 Fuel Consumption Meter
X15 Electric Power Sensor
Z1 Product
Z2 Product

## Claims

1. An information processing device comprising:
an acquisition unit configured to acquire information on electric power and information on fuel which are used in each of a plurality of steps of a distribution process of a tangible object;
a calculation unit configured to calculate an amount of CO₂ emissions generated in each of the steps, by using the information on electric power and the information on fuel which are acquired by the acquisition unit; and
a storage control unit configured to control a storage unit to store the amount of CO₂ emissions generated in each of the steps that is calculated by the calculation unit, in association with the tangible object.

2. The information processing device according to claim 1, wherein
the information on electric power includes a usage rate for each electric power supply,
the information on fuel includes a fuel type, and
the calculation unit is configured to calculate the amount of CO₂ emissions generated in each of the plurality of steps, using the usage rate for each electric power supply and the fuel type.

3. The information processing device according to claim 2, wherein
the acquisition unit is configured to acquire a usage rate for each electric power supply according to a location where the tangible object is present in each of the plurality of steps.

4. The information processing device according to any one of claims 1 to 3, wherein
the calculation unit is configured to calculate the amount of CO₂ emissions generated in each of the plurality of steps, in consideration of information regarding the amount of CO₂ emissions of the tangible object and information regarding the amount of CO₂ emissions of a device used for the tangible object.

5. The information processing device according to any one of claims 1 to 4, further comprising:
a generation unit configured to generate a prediction model used for predicting the amount of CO₂ emissions generated in each of the plurality of steps, by using the information on electric power, the information on fuel, and the amount of CO₂ emissions generated in each of the plurality of steps of a plurality of tangible objects of a same type.

6. The information processing device according to claim 5, further comprising:
a prediction unit configured to predict the amount of CO₂ emissions generated in each of one or more unfinished steps included in the plurality of steps of a target tangible object, by using the prediction model.

7. The information processing device according to claim 6, further comprising:
a determination unit configured to determine an environmental load equivalent amount of the target tangible object, based on the amount of CO₂ emissions which are generated in each of the one or more unfinished steps included in the plurality of steps and which the prediction unit predicts for the target tangible object, or the amount of CO₂ emissions which are generated in each of one or more finished steps included in the plurality of steps and which the calculation unit calculates for the target tangible object and the amount of CO₂ emissions which are generated in each of the one or more unfinished steps included in the plurality of steps and which the prediction unit predicts for the target tangible object.

8. The information processing device according to claim 7, wherein
the determination unit determines a price of the tangible object, based on the environmental load equivalent amount of the target tangible object.

9. An information processing method comprising:
acquiring information on electric power and information on fuel which are used in each of a plurality of steps of a distribution process of a tangible object;
calculating an amount of CO₂ emissions generated in each of the steps, by using the information on electric power and the information on fuel; and
controlling a storage unit to store the amount of CO₂ emissions generated in each of the steps that is calculated, in association with the tangible object.

10. The information processing method according to claim 9, wherein
the information on electric power includes a usage rate for each electric power supply,
the information on fuel includes a fuel type, and
the calculating includes calculating the amount of CO₂ emissions generated in each of the steps, using the usage rate for each electric power supply and the fuel type.

11. The information processing method according to claim 10, wherein
the acquiring includes acquiring a usage rate for each electric power supply according to a location where the tangible object is present in each of the plurality of steps.

12. The information processing method according to any one of claims 9 to 11, wherein
the calculating includes calculating the amount of CO₂ emissions generated in each of the plurality of steps, in consideration of information regarding the amount of CO₂ emissions of the tangible object and information regarding the amount of CO₂ emissions of a device used for the tangible object.

13. The information processing method according to any one of claims 9 to 12, further comprising:
generating a prediction model for each step for predicting the amount of CO₂ emissions generated in each of the plurality of steps, using the information on electric power, the information on fuel, and the amount of CO₂ emissions generated in each of the plurality of steps of a plurality of tangible objects of a same type.

14. The information processing method according to claim 13, further comprising:
predicting the amount of CO₂ emissions generated in each of one or more unfinished steps included in the plurality of steps for a target tangible object, by using the prediction model.

15. The information processing method according to claim 14, further comprising:
determining an environmental load equivalent amount of the target tangible object, based on the amount of CO₂ emissions which are generated in each of the one or more unfinished steps included in the plurality of steps and which are predicted for the target tangible object, or the amount of CO₂ emissions which are generated in each of the one or more finished steps included in the plurality of steps that is calculated for the target tangible object and the amount of CO₂ emissions which are generated in each of the one or more unfinished steps included in the plurality of steps and which are predicted.

16. A program for causing a processor of the information processing device according to any one of claims 1 to 8 to execute processing of each unit included in the information processing device.
